# EUROPEAN PATENT SPECIFICATION

(11) **EP 1 544 574 B1**
(45) Date of publication and mention of the grant of the patent: **02.07.2008**
(21) Application number: 04029859.8
(22) Date of filing: 16.12.2004
(51) Int. Cl.: G01C 21/26, H04L 12/28

(54) **Information distribution system and information distribution method**
Informationsverteilungssystem und -verfahren
Système et procédé de distribution d'information

(30) Priority: 19.12.2003 JP 2003423428
(43) Date of publication of application: 22.06.2005
(73) Proprietor: AISIN AW CO., LTD., Anjo, Aichi 444-1192 (JP)
(72) Inventor: Yamada, Kunihiro, Okazaki Aichi 444-8564 (JP); Ishikawa, Tomoaki, Okazaki Aichi 444-8564 (JP)
(74) Representative: TBK-Patent

(56) References cited:
- EP-A- 1 371 950
- US-A1- 2003 016 804
- PATENT ABSTRACTS OF JAPAN vol. 2003, no. 07, 3 July 2003 (2003-07-03) -& JP 2003 065785 A (NISSAN MOTOR CO LTD), 5 March 2003 (2003-03-05)

## Description

This invention relates to an information distribution system and an information distribution method.

Conventional vehicle mounted navigation apparatus are designed in such a manner that, in order to obtain a destination from someplace other than the navigation apparatus, a navigation system must be used in order to download the new into the navigation apparatus. In the navigation system, a destination, which was set up by utilizing an information terminal, is registered in an information center, and the registered destination is downloaded onto the navigation apparatus (e.g., see, JP-A-2001-148092).

In the above-described conventional navigation system, when an ignition switch of a vehicle is turned ON, a destination is downloaded from the information center to the navigation apparatus. However, if a large amount of information with a large data size is downloaded, it may be a long time until the download is complete. Further, if communication between the information center and the navigation apparatus has a limited communication range, for example, a wireless LAN, the navigation apparatus, and thus the vehicle, will have to remain within the limited communication range until the lengthy download is complete.

Document US 2003/016804 A1 discloses a navigation system, in which several parts of the necessary information are transmitted via several access points. Moreover, the route is calculated in the mobile device of a vehicle.

Document JP 2003-065785 discloses an information center, a mobile terminal apparatus and a information distribution method as set out in the preambles of claims 1, 5, 6 and 10, respectively.

It is an object of the present invention to further improve the information center, mobile terminal apparatus and the information distribution method and to provide an information distribution system and an information distribution method in which necessary distribution information is downloaded effectively and there is no need to wait for a lengthy download until it is possible to move a vehicle..

This object is solved by an information center as set in claim 1, by a mobile terminal as set out in claim 5, and by methods as set out in claim 6 or 10.

Advantageous developments are set out in the dependent claims.

Exemplary embodiments of the invention will now be described with reference to the accompanying drawings, wherein:

Fig. 1 is a block diagram of a navigation system according to an exemplary embodiment of the invention;

Fig. 2 is a view which explains a navigation apparatus according to the exemplary embodiment of the invention;

Fig. 3 is a flow chart which shows an operation of the navigation system according to the exemplary embodiment of the invention;

Fig. 4 is a view which explains an operation of access point judgment processing in the mode for carrying out this invention;

Fig. 5 is a view which explains an operation of data size calculation processing according to the exemplary embodiment of the invention;

Fig. 6 is a first view which shows an operation on the occasion of obtaining distribution information according to the exemplary embodiment of the invention; and

Fig. 7 is a second view which shows the operation on the occasion of obtaining distribution information according to the exemplary embodiment of the invention.

In the following, exemplary embodiments are described in detail.

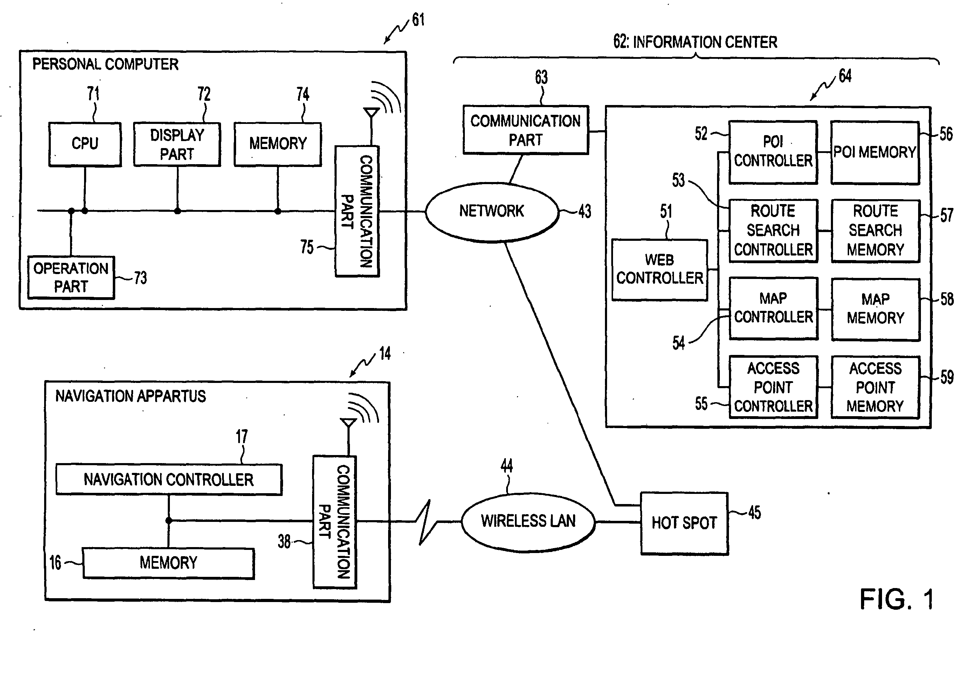

Fig. 1 is a block diagram of a navigation system according to an exemplary embodiment of this invention.

As shown in Fig. 1, the navigation system can include a navigation apparatus 14 as a mobile terminal apparatus and as an on-board terminal mounted on a vehicle, a hot spot 45, and a personal computer 61 as a user terminal. The system can also include an information center 62 as an information provider. The navigation apparatus 14 and the personal computer 61 may be connected through a wireless LAN (not shown), and the navigation apparatus 14 and the hot spot 45 may be connected through a wireless LAN 44. The hot spot 45, the personal computer 61, and the information center 62 may be connected through a network 43. Thus, the navigation system may include the navigation apparatus 14, the network 43, the wireless LAN 44, the hot spot 45, the personal computer 61, the information center 62, and so on.

The information center 62 may be equipped with a communication part 63 and a center controller group 64. The center controller group 64 can be equipped with various controllers such as a WEB controller 51, a POI (facility information) controller 52, a route search controller 53, a map controller 54, and an access point controller 55. The center controller group 64 can also include a POI memory 56, a search memory 57, a map memory 58, and an access point memory 59 that are respectively connected to the POI controller 52, the route search controller 53, the map controller 54, and the access point controller 55. The above-described controllers can each include a control device such as, for example, a CPU, and/or an MPU, a recording device such as, for example, a hard disk, and an internal recording device, such as, for example, a RAM, a ROM, and/or a flash memory.

The above-described memories, which record navigation information, may be configured by databases. It should be appreciated that according to this exemplary embodiment, the WEB controller 51 is always connected to, for example, the WWW (World Wide Web), and can open a site for providing various information to a controller (e.g., a server) of a predetermined provider through the network 43.

The navigation apparatus 14 may be equipped with, for example, a navigation controller 17, a memory 16 as a data recording part, and a communication part 38.

According to this exemplary embodiment, the personal computer 61 is placed at a reference spot, e.g., a home of an operator, and may be equipped with a CPU 71 as a controller, a display part 72 as a notification device that notifies various information to an operator, an operation part 73, a memory 74 as a data recording part, and/or a communication part 75. The communication part 75 can include a modem (not shown), for connecting the personal computer 61 to the information center 62, and/or an access point (not shown), for connecting the personal computer 61 to the navigation apparatus 14 by the wireless LAN through the communication part 38.

The hot spot 45 can be, for example, a restaurant, a store, or any other place having an access point (not shown) that is capable of receiving signals from the communication part 38 across the wireless LAN 44 to connect the navigation apparatus 14 to the network 43.

According to this exemplary embodiment, the navigation apparatus 14 is used as a mobile terminal. However, according to various other exemplary embodiments, it is also possible to use any other device that can be connected to the wireless LAN 44, and which can carry out interactive communication, such as, for example, an electronic notebook, a portable telephone, a portable terminal, a PDA (personal digital assistant), and/or a television telephone. Also, according to this exemplary embodiment, the personal computer 61 is a user terminal. However, according to various other exemplary embodiments, it is possible to use, for example, a home server, and/or any other device that can be connected to the network 43, and which can carry out interactive communication, such as an electric notebook, a portable telephone, a portable terminal, a PDA, and/or a television telephone.

Furthermore, according to this exemplary embodiment, as a controller, the CPU 71 is used. According to various other exemplary embodiments, it is also possible to use, for example, an MPU as a substitute for the CPU 71. As the display part 72, it is possible to use, for example, a display as a CRT display, a liquid crystal display, and/or a plasma display.

As the operation part 73, it is possible to use, for example, a keyboard, a mouse, and/or a touch panel that is formed on the above-described display. It is also possible to use, for example, a bar code reader, a remote control device for remote operation, a joy stick, a light pen, and a stylus pen. In the above-described touch panel, an operation part area such as various keys, switches, and buttons may be formed on the display, and by touching (depressing) the operation part area, it is possible to carry out an input.

For the memory 74, it is possible to use, for example, a RAM, a ROM, a flash memory, and/or a hard disk. In addition, as substitute for the hard disk, it is also possible to use, for example, a flexible disc, a magnetic tape, a magnetic drum, a CD-ROM, a CD-R, a MD, a DVD, an optical disc, a MO, an IC card, an optical card, and/or a memory card. In addition, in order to use the hard disk, a reading device for reading out data recorded in the hard disk, and a writing device for recording data may be included in the memory 74.

In addition to the, for example, navigation apparatus 14, the personal computer 61, and the center controller group 64, servers of the network provider function as a computer on the basis of a predetermined program, data and so on, respectively, independently, or in combination of 2 or more.

In the POI memory 56, the search memory 57, the map memory 58, and the access point memory 59, various data is stored such as, for example, facility data regarding various facilities, search data for searching a route and sound output data for outputting a search result by an audio output part (not shown), of the navigation apparatus 14, map data for displaying maps, and a position, a range in which communication is possible, a communication speed and so on as to each access point.

The map data may include, for example, road data that represents information of each road (road link), intersection data which represents information of each intersection, and/or node data which represents information of a node point which was set along each road. The facility data may include data which represents facilities such as, for example, hotels, gas stations, and parking lots, in, for example, each district.

The information center 62 is capable of receiving general information such as news, weather forecasts, and electronic communications. The information center 62 may also receive traffic information that can include congestion information, restriction information, parking lot information, traffic accident information, congestion at service areas, that is transmitted from a traffic information transmission center as an information provider, e.g., VICS (registered trademark) (Vehicle Information and Communication System) center (not shown). The information center 62 is further able to receive, for example, image information of a television program, or music information of a music program and so on. In addition to general information transmitted from a broadcasting station, for example, a content provider may send various distribution information of the traffic information, general information, image information, music information and so on to the personal computer 61 or the navigation apparatus 14 through the network 43, in a data format of, for example, text data, sound data, image data and so on.

Also, in the center controller group 64, a statistical data controller (not shown) may be connected to a statistical memory (not shown). The statistical memory can store statistical data as history information. The statistical data may include processed data that is obtained by applying predetermined processing to, for example, past traffic information, and/or general information as well as past traffic information, and/or general information that are recorded chronologically.

Furthermore, in the center controller group 64, there may be a mail controller (not shown), a personal information controller (not shown), a personal information memory (not shown) that is connected to the personal information controller and can record personal data of, for example, schedules set by an operator, as well as a mail memory (not shown) that can record transmission data, reception data, and so on which were transmitted and received by the mail controller.

The network 43 can include one or more communication line networks such as, for example, the Internet, a LAN (Local Area Network), a WAN (Wide Area Network), an intranet, a portable telephone line network, a telephone line network, a public communication line network, and/or an exclusive communication line network. In addition, it is also possible to use as part of the network 43 a non-stop automatic fee payment system (ETC), and/or a narrow band communication system (DSRC) that are utilized in an advanced road traffic system (ITS). CS broadcasting by a broadcasting satellite, BS broadcasting, terrestrial digital television broadcasting, FM multiplex broadcasting may also make up part of the network 43.

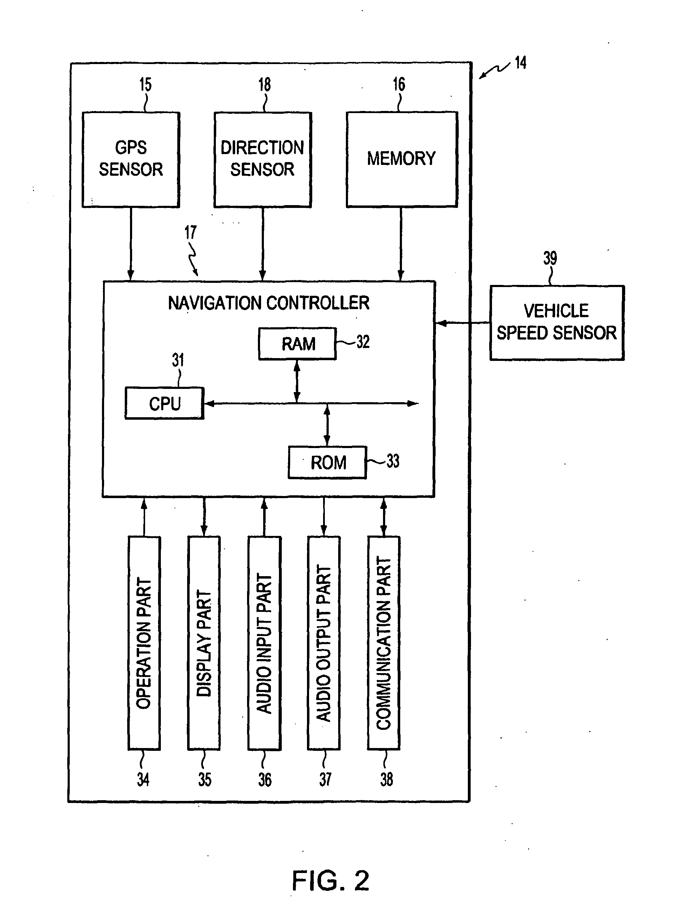

The navigation apparatus 14 of the above-described configuration will be described with reference to Fig. 2.

As shown in Fig. 2, the navigation apparatus 14 can include a GPS sensor 15 as a present location detector that detects a present location of a vehicle, a memory 16 in which various data is recorded, a navigation controller 17 that carries out, for example, various arithmetic processing on the basis of information inputted, a direction sensor 18 as a direction detecting part that detects a direction of the vehicle, an operation part 34 as a first input part, a display part 35 as a first notification part that notifies various information to an operator, an audio input part 36 as a second input part, an audio output part 37 as a second notification part which notifies various information to an operator, and/or a communication part 38. A vehicle speed sensor 39 may be connected to the navigation controller 17.

The navigation controller 17 can include a CPU 31 as a control device which carries out control within the navigation apparatus 14, a RAM 32 that is used as a working memory on the occasion that the CPU 31 carries out various arithmetic processing, and/or a ROM 33 that can store various programs for carrying out a search for a route, and/or route guidance up to a destination place. The navigation controller 17 may also include, in addition to a program for control, a flash memory (not shown) as a recording medium for, for example, downloading and recording data which was transferred from the personal computer 61. In addition, according to various other exemplary embodiments, it is also possible to use, for example, an MPU in addition to, or instead of, the CPU 31. The CPUs 31, 71, the navigation controller 17, and/or the CPUs and/or the MPUs of each controller in the center controller group 64 can function as a computer.

The memory 16 may be, for example, a hard disk and may be equipped with a recording head as a driver for reading, for example, a predetermined program and/or data that are recorded in the hard disk, and/or writing predetermined data in the hard disk.

According to this embodiment, the hard disk is used as the memory 16. According to various other exemplary embodiments as substitute for the hard disk, it is possible to use, for example, a RAM, a ROM, a flash memory, and/or a hard disk. In addition, as substitute for the hard disk, it is also possible to use, for example, a flexible disc, a magnetic tape, a magnetic drum, a CD-ROM, a CD-R, a MD, a DVD, an optical disc, a MO, an IC card, an optical card, and/or a memory card. In order to use the hard disk, a reading device for reading out data recorded in the hard disk, and a writing device for recording data may be included in the memory 74.

According to this exemplary embodiment, various programs may be recorded in the ROM 33, and various data may be recorded in the memory 16. According to various other exemplary embodiments, it is possible to record programs, and/or data in a hard disk, and to read out programs, and/or data and so on from the hard disk and to write them in the flash memory. Therefore, by replacing the hard disk, it is possible to update the programs, data and so on. Also, in case that an automatic transmission control device for carrying out control of an automatic transmission apparatus is mounted on the vehicle (not shown) it is possible to record a program, data and so on for controlling the automatic transmission control device, in the hard disk.

The operation part 34 can modify a present location of the vehicle when starting to drive, can input a departure place as a guidance starting spot and a destination place as a guidance ending spot, and can operate the communication part 38. The operation part 34 is comprised of operation switches (not shown) such as, for example, various keys, switches, and buttons. Also, as the operation part 34, it is possible to use a bar code reader, a remote control device for remote operation, a joy stick, a light pen, and a stylus pen. Furthermore, it is also possible to configure the operation part 34 by operation switches which are displayed as images on a display screen of a touch panel formed on a display of the display part 35, (not shown). In that case, an input is carried out by touching the operation switch.

The traffic information, general information, and/or image information may be displayed on the display of the display part 35 as non-guidance information. Operation guidance, an operation menu, a guidance of keys, a search route from a present location up to a destination place, guidance information along the search route may be displayed on the display of the display part 35 as guidance information. As the display part 35, it is possible to use, for example, a display as a CRT display, a liquid crystal display, and/or a plasma display.

The audio input part 36 can include, for example, a microphone (not shown) and can input necessary information by sounds. Furthermore, the audio output part 37 may be equipped with a sound synthesizing device (not shown) and a speaker, (not shown). Thus, for example, the search route, and/or the guidance information can be sound-outputted from the audio output part 37, for example, by sounds which were synthesized by the sound synthesizing device. It is also possible to sound-output various sounds, various guidance information and so on that were sound-recorded in, for example, a tape, and/or a memory, in advance, in addition to sounds which were synthesized by the sound synthesizing device.

The communication part 38 can include a beacon receiver (not shown) as a first receiving device that receives the traffic information transmitted from the traffic information transmission center through, for example, a electromagnetic wave beacon device, and/or an optical beacon device that are disposed along a road, the communication part 38 can include an FM receiver (not shown) as a second receiving device that receives FM multiplex information composed of general information such as, for example, news, weather forecasts and so on through a FM broadcasting station. The beacon receiver and FM receiver may be unitized and disposed as a VICS receiver, but can also be disposed separately.

The navigation apparatus 14 and the personal computer 61 are connected by the wireless LAN so as to be able to carry out interactive communication. Accordingly, as described above, an access point may be disposed on the communication part 75, and a slot (not shown) such as, for example, a PCMCIA slot, a PC card slot and so on may be formed on the communication part 38. A wireless card can be inserted into the slot. In addition, according to this embodiment, the navigation apparatus 14 and the personal computer 61 are connected by the wireless LAN. However, according to various other exemplary embodiments, the navigation apparatus 14 and the personal computer 61 may be connected by a wired LAN. In such embodiments, a hub is disposed in the communication part 75, and the hub and the communication part 38 are coupled by a cable in such a manner that they can be coupled and de-coupled.

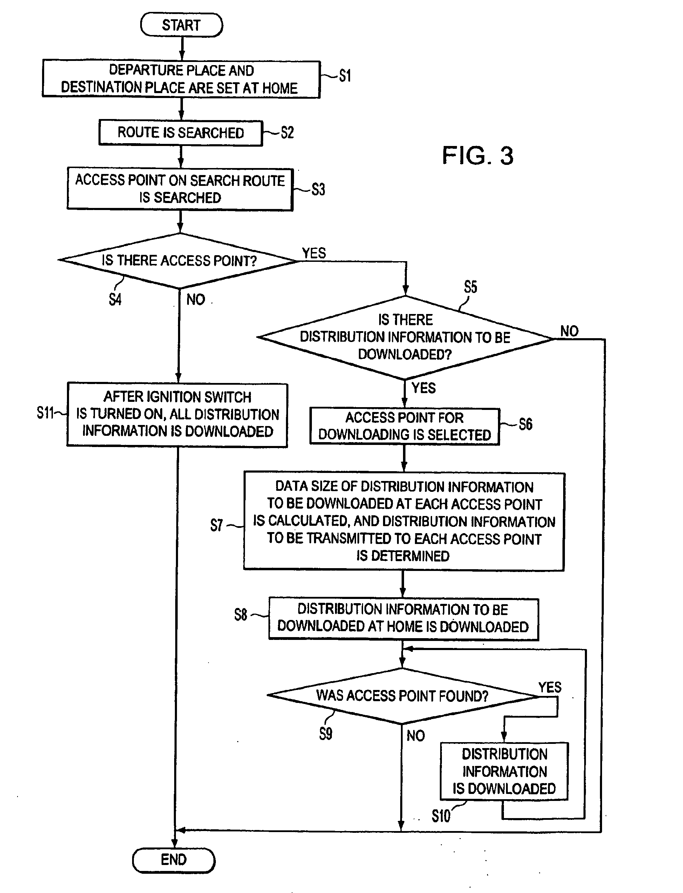

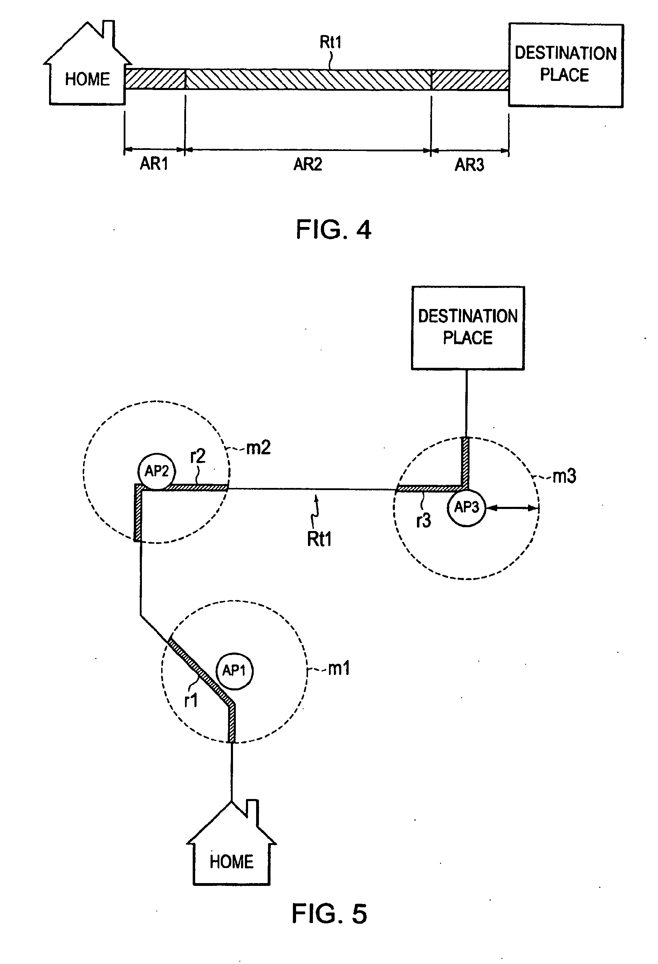

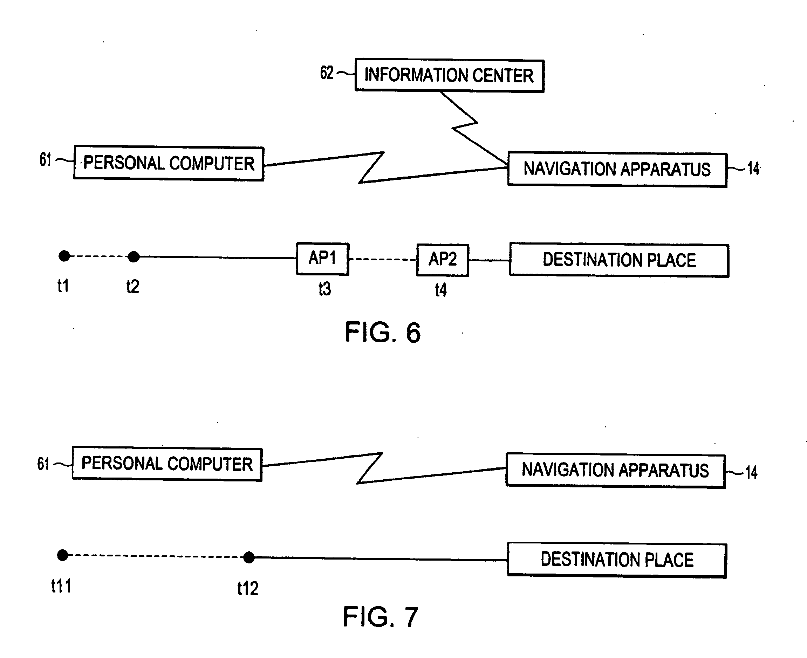

Operation of the navigation system of the above-described configuration as an information obtaining system will be described with reference to Figs. 3-7. Fig. 3 is a flow chart which shows an operation of the navigation system according to the exemplary embodiment of this invention. Fig. 4 is a view which explains an operation of access point judgment processing according to the exemplary embodiment of this invention. Fig. 5 is a view which explains an operation of data size calculation processing according to the exemplary embodiment of this invention. Fig. 6 is a first view which shows an operation on the occasion of obtaining distribution information according to the exemplary embodiment of this invention. Fig. 7 is a second view which shows an operation on the occasion of obtaining distribution information according to the exemplary embodiment of this invention.

If an operator wants to obtain various distribution information including, for example; traffic information, general information, image information, and/or music information, he/she sets a departure place and a destination place using the personal computer 61 at, for example, his/her home. Accordingly, when he/she operates the operation part 73 to input the departure place and the destination place, the CPU 71 sets up the departure place and the destination place as search conditions, and transmits the search conditions to the information center 62. The CPU 71 also transmits a distribution request for requesting distribution of the distribution information, to the information center 62.

In addition, for example, when a PDA is used as substitute for the personal computer 61, it is possible to set a GPS card in a slot such as a PCMCIA slot, a PC card slot and so on of the PDA, and to set up a present location which was detected by the GPS card, as a departure place.

When the search conditions and distribution request are received by the communication part 63 of the information center 62, the route search controller 53, for example, reads out search data from the search memory 57, and if needed, refers to the statistical memory to read out statistical data, and reads traffic information which was transmitted from the traffic information transmission center. Thus, the route search controller 53 obtains information which is necessary for searching a route.

Subsequently, the route search controller 53 carries out search processing, and searches for a route (e.g., search route Rt1) in accordance with the search conditions, on the basis of, for example, the search data, and if needed on the basis of the statistical data, the traffic information.

Because the navigation apparatus 14 is equipped with the communication part 38, when the vehicle passes through a vicinity of the hot spot 45 (containing an access point), it connects the navigation apparatus 14 to the network 43 through the wireless LAN 44 so that it is possible to carry out communication with the information center 62.

Therefore, according to this embodiment, the distribution information may be downloaded through an access point of a hot spot along the route in addition to being able to download distribution information through the communication part 75 when an ignition switch of a vehicle is turned ON, e.g., via an access point of the user's home. Accordingly, the access point controller 55, can carry out access point search processing. When the access point controller 55 receives a distribution request, it can read out access point data from the access point memory 59, search an access point on the search route Rt1, and judges whether there is an access point on the search route Rt1.

If there is an access point on the search route Rt1, the WEB controller 51 determines whether there is distribution information that can be downloaded. If there is distribution information which can be downloaded, the access point server 55 carries out access point selection processing, and, based on the type of distribution information, selects an access point (e.g., either the communication part 75 or an access point along the search route Rt1) suitable for downloading the distribution information.

For example, since route guidance data for guiding the search route Rt1 is necessary for driving a vehicle from the user's home to a destination place, it is preferable to download the route guidance data at the user's home. Therefore, the access point selection processing means selects the communication part 75 as an access point for transmitting route guidance data. The route guidance data may be composed of, for example, route data which represents the search route Rt1, map data which represents a map in the vicinity of the search route Rt1, and/or audio output data for guiding the search route Rt1 by the sound output part 37 and represents guidance information for route guidance.

According to this exemplary embodiment, audio output data may be included in the route guidance data. In various other exemplary embodiments, the audio output data may be recorded in advance in the memory 16 of the navigation apparatus 14. Thus, in those embodiments, the audio output data is not included in the route guidance data.

Because distribution information such as, for example, image information, and/or music information are necessary for viewing a movie, and listening to music during a trip, it is preferable to download them in the vicinity of the user's home. Therefore, for example, the access point controller 55 selects, as an access point for transmitting the, for example, image information, and/or music information, an access point in the vicinity of the user's home on the search route Rt1 (e.g., in an area AR1 within a range of a predetermined distance from the home as shown in Fig. 4).

Furthermore, because distribution information such as, for example, general information, including news, weather forecasts and so on are usually not necessary until the destination is reached, it is preferable to download that general information short of the vicinity of a destination place. Therefore, the access point controller 55 selects, as an access point for transmitting the general information, any access point prior to the vicinity of a destination place on the search route Rt1, (e.g., in areas AR1 and AR2, other than an area AR3, within a range of a predetermined distance from the destination place shown in Fig. 4).

Because distribution information such as, for example, facility information of a vicinity of a destination place may be obtained at any time prior to arrival at a destination place, it is preferable that the access point controller 55 selects as an access point for transmitting facility information, any access point up to and including the vicinity of the destination place (e.g., in any areas AR1 to AR3 on the search route Rt1 as shown in Fig. 4).

Subsequently, the WEB controller 51, carries and calculates the data size of distribution information which can be downloaded at each access point on the search route Rt1.

As shown in Fig. 5, in order to calculate the data size, the WEB controller 51, for example, reads out from the access point memory 59 a range mi (i = 1, 2, ...) within which communication with each access point on the search route APi (i = 1, 2, ...) is possible, the WEB controller 51 also reads out from the access point memory 59 a communication speed (data size per unit time) with respect to each access point APi on the search route Rt1. Then, the WEB controller 51 configures the search route Rt1 with reference to the map memory 58, and reads out, for example, a distance of a road ri (i = 1, 2, ...), and/or a road type in each range mi in which communication is possible. Furthermore, the range mi in which communication is possible may be limited by the maximum range in which the communication part 38 can detect electromagnetic waves of wireless communication through the wireless LAN 44.

The WEB controller 51 determines whether each road ri is, for example, a general road such as a city road, a prefectural road, a national road, or a motor highway such as a toll road, and an express way, and reads out an average speed of a vehicle from, for example, a RAM of the WEB controller 51, which was set in accordance with the road type (e.g., set as 30 km/h in case of a general road, and set as 60 km/h in case of a motor highway). According to this exemplary embodiment, the average vehicle speeds recorded in the WEB controller 51 can be changed as needed.

Based on the distance of the road ri, the communication speed, and average vehicle speed, the WEB controller 51 calculates a data size of distribution information which can be downloaded, with respect to each access point APi along the search route Rt1.

The WEB controller 51 carries out distribution information determination processing and determines which distribution information will be transmitted at each access point APi, on the basis of the type of distribution information, which was assigned to each access point APi, and the data size capability of each access point APi, which was calculated in the data size calculation processing.

If there is any remaining distribution information which can not be transmitted at each access point APi on the search route Rt1, among the distribution information for which distribution requests were sent out, as described above, it may be downloaded, for example, by the personal computer 61 at the user's home. In this connection, the WEB controller 51, for example, identifies that remaining distribution information as distribution information to be downloaded at the user's home in addition to the route guidance data.

The WEB controller 51 carries out transmission processing, and transmits the distribution information to be downloaded at the user's home, to the personal computer 61. When the distribution information is transmitted by the WEB controller 51, the CPU 71, receives the distribution information and downloads and records the distribution information in, for example, a hard disk of the memory 74.

With reference to Figs. 6 and 7, when an operator (e.g., a driver), turns ON an ignition switch and activates the navigation apparatus 14 at timing t1, a present location is detected by the GPS sensor 15, and a direction of the vehicle is detected by the direction sensor 18.

In the personal computer 61, the CPU 71 reads out the distribution information from, for example, the hard disk of the memory 74, and transmits it to the navigation apparatus 14. Correspondingly, in the navigation apparatus 14, the CPU 31 downloads and records the distribution information in, for example, the hard disk of memory 16. In this manner, when the predetermined distribution information is completely downloaded, it is possible to start to drive a vehicle at timing t2.

Then, the CPU 31 reads out route guidance data among the distribution information, from, for example, the flash memory, and on the basis of the route guidance data, forms a map screen on the display part 35. The CPU 31 displays a present location, displays a map in the vicinity of the present location, displays a direction of the vehicle in the map screen, displays the search route Rt1 in the vicinity of the present location, and notifies the search route Rt1 to a driver with, for example, an audio message via audio output part 37. Accordingly, a user can drive a vehicle in accordance with the present location which was displayed on the map screen or audibly notified, the neighboring map, the direction of the vehicle and the search route Rt1.

When the vehicle enters the range mi, it becomes possible for the communication part 38 to detect electromagnetic waves of wireless communication through the wireless LAN 44. The CPU 31 determines whether an access point APi was found based on whether the communication part 38 has detected electromagnetic waves of wireless communication through the wireless LAN 44. When an access point APi is found, the CPU 31 carries out communication processing, and in the range mi in which communication is possible, accesses the access point APi, thereby connecting the navigation apparatus 14 to the network in order to carry out communication with the information center 62.

Therefore, the WEB controller 51 transmits the distribution information which is respectively assigned to each access point APi, to the navigation apparatus 14, at a corresponding timing t3, t4, ...tn.

When the distribution information is transmitted by the WEB controller 51, the CPU 31 in the navigation apparatus 14 receives the distribution information, and subsequently, downloads and records the distribution information in, for example, a hard disk of the data recording part 16.

If, as shown in Fig. 7 there is no access point APi on the search route Rt1, it is not possible to download distribution information at an access point APi. Therefore, all of the distribution information which was requested for distribution, as described above, will be downloaded from the personal computer 61 at the user's home. Accordingly, in the information center 62, the WEB controller 51 determines that all distribution information will be downloaded at the user's home. The WEB controller 51 transmits all the distribution information to the personal computer 61. In the personal computer 61, the CPU 71 receives the distribution information and the CPU 71 downloads and records the distribution information in, for example, a hard disk of the memory 74.

Afterwards, when a user turns ON the vehicle navigation apparatus 14 by turning ON an ignition switch for driving the vehicle at timing t11, the CPU 71 reads out distribution information from the hard disk of the memory 74. The CPU 71 transmits the distribution data to the navigation apparatus 14. In the navigation apparatus 14, the CPU 31 downloads and records the distribution information in, for example, the hard disk of the memory 16. In this manner, when all of the distribution information is completely downloaded, it is possible to start driving of a vehicle timing t12.

If a schedule of a user is recorded in the personal information memory of the center controller group 64, and a predetermined destination place is set in that schedule, it is possible to download the predetermined distribution information relating to that scheduled destination during an arbitrary period before the departure date. In that case, the access point controller 55 selects an access point APi for downloading the predetermined information, and the WEB controller 51 determines the predetermined distribution information to be transmitted at each access point APi, on the basis of a type of distribution information that was assigned to each access point APi in the access point selection processing, a data size of each access point APi that was calculated in the data size calculation processing.

Because the predetermined distribution information is not changed before the departure date, it may be distributed prior to the departure date. Distribution information that might changed before the departure date, like weather, news, event information and so on, is excluded, and distributed on the departure date.

The above-described process is summarized in the flow chart of Fig. 3. As shown in Fig. 3, operation begins in step S1 where a departure place and a destination place are set at the user's home. Then, in step S2, a route Rt1 is searched. Next, in step S3, access points APi are searched for on search route Rt1. In step S4, it is determined whether there is an access point APi on route Rt1. If there is an access point APi, operation continues to step S5. If there is not an access point, operation jumps to step S 11. In step S5, it is determined whether there is distribution information to be downloaded. If there is distribution information to be downloaded, operation continues to step S6. If there is not distribution information to be downloaded, operation ends.

In step S6, an access point APi is selected for downloading. In step S7, a data size of distribution information which can be downloaded at each access point APi is calculated, and distribution information to be transmitted at each access point APi is determined. Then, in step S8, distribution information to be downloaded at the user's home is downloaded. In step S9, It is determined whether an access point APi is found while traveling the route. If the access point APi is found, operation continues to step S 10. If the access point is not found, operation ends. In step S10, distribution information is downloaded, and operation returns to step S9. In step S11, after an ignition switch is turned ON, all distribution information is downloaded, and operation ends.

According to this exemplary embodiment, the personal computer 61 that is placed at the home of an operator, is used as a reference spot. According to various other exemplary embodiments, as substitute for the personal computer 61, it is also possible to use, for example, a personal computer or information terminal which was placed at, for example, a working place of an operator, and/or various other facilities such as, for example, restaurants, airports, train stations, etc. According to these embodiments, on the occasion of downloading distribution information, it is possible to use a communication part of a personal computer which was placed, for example, at the working place of an operator, and/or various other facilities such as, for example, restaurants, airports, train stations, etc as an access point. Thus, the access point may be used in a similar manner as described with respect to the personal computer 61 when the ignition is turned ON.

According to the above-described embodiments, it is possible to effectively download necessary distribution information from an access point APi on the search route Rt1, during the driving of the vehicle, and therefore, it is possible to cut down on the distribution information which is required to be downloaded by the personal computer 61 at the user's home. Therefore, even if a data size of entire distribution information is large, it is possible to shorten a time between turning the ignition ON and such time that the first download is finished. As a result, it is unnecessary to wait for all of the distribution data to be downloaded, thereby allowing the vehicle to move sooner.

While various features of this invention have been described in conjunction with the exemplary embodiments outlined above, various alternatives, modifications, variations, and/or improvements of those features may be possible. Accordingly, the exemplary embodiments of the invention, as set forth above, are intended to be illustrative. Various changes may be made without departing from the scope of the invention, which is defined by the appended claims.

As described above, an information distribution center includes a controller that searches for a route from a departure place to a destination place as a search route and searches for access points on the search route. The controller selects, based on distribution information, a first access point that can communicate with a mobile terminal apparatus when a vehicle is turned on and that corresponds to a first portion of the distribution information and selects, based on distribution information, a second access point along the search route that corresponds to a second portion of distribution information. The controller then transmits the first portion of the distribution information to the first access point and transmits the second portion of the distribution information to the second access point.

## Claims

1. An information distribution center, comprising:
a controller **(64)** that is adapted to:
search for a route from a departure place to a destination place as a search route **(Rt1);**
search for access points on the search route;
select, based on distribution information, a first access point **(75)** that can communicate with a mobile terminal apparatus **(14)** when a vehicle is turned on and that corresponds to a first portion of the distribution information;
select, based on the distribution information, a second access point **(AP1, AP2)** along the search route that corresponds to a second portion of distribution information;
transmit the first portion of the distribution information to the first access point; and
transmit the second portion of the distribution information to the second access point,
**characterized in that**
the controller **(64)** is adapted to define the first portion of distribution information and second portion of distribution information based on types of the distribution information.

2. The information distribution center of claim 1, wherein, if there is no access point on the search route, the controller **(64)** is adapted to transmit all of the distribution information to the first access point **(75).**

3. The information distribution center of claim 1, wherein the controller **(64)** is adapted to determine the size of the first portion of distribution information and the size of the second portion of distribution information based on one or more of a communication range of each access point **(AP1, AP2**), the search route (**Rt1**), a communication speed with each access point, and an average vehicle speed in the vicinity of each access point.

4. The information distribution center of claim 1, wherein the controller **(64)** is adapted to transmit, if a user's schedule indicates that the distribution information is required, a third portion of the distribution information that will not change prior to a departure time indicated in the schedule, prior to the departure time indicated in the schedule.

5. A mobile terminal apparatus, comprising:
a controller (**17**) that is adapted to:
transmit a request to receive distribution information from an information distribution center **(62);**
receive a first portion of the distribution information, including a searched route **(Rt1),** from a first access point **(75),** the first access point capable of communicating with the mobile terminal apparatus when a vehicle is turned on;
receive a second portion of the distribution information from a second access point **(AP1, AP2),** the second access point located on the searched route;
**characterized in that**
the first portion of distribution information and the second portion of distribution information are defined based on types of the distribution information.

6. A method for distributing information, comprising:
searching for a route from a departure place to a destination place as a search route **(Rt1);**
searching for access points on the search route;
selecting, based on distribution information, a first access point **(75)** that can communicate with a mobile terminal apparatus when a vehicle is turned on and that corresponds to a first portion of the distribution information;
selecting, based on the distribution information, a second access point **(AP1, AP2)** along the search route that corresponds to a second portion of distribution information;
transmitting the first portion of the distribution information to the first access point **(75);** and
transmitting the second portion of the distribution information to the second access point **(AP1, AP2);**
**characterized by**
defining the first portion of distribution information and second portion of distribution information based on types of the distribution information.

7. The method of claim 6, further comprising:
determining the size of the first portion of distribution information and the size of the second portion of distribution information based on one or more of a communication range of each access point **(75, AP1, AP2),** the search route **(Rt1),** a communication speed with each access point, and an average vehicle speed in the vicinity of each access point.

8. The method of claim 6, further comprising:
transmitting, if a user's schedule indicates that the distribution information is required, a third portion of the distribution information that will not change prior to a departure time indicated in the schedule, prior to the departure time indicated in the schedule.

9. A storage medium storing a set of program instructions executable on a data processing device and usable for performing the method recited in claim 6.

10. A method for distributing information, comprising:
transmitting a request to receive distribution information from an information distribution center **(62);**
receiving a first portion of the distribution information, including a searched route **(Rt1),** from a first access point **(75),** the first access point capable of communicating with the mobile terminal apparatus when a vehicle is turned on;
receiving a second portion of the distribution information from a second access point **(AP1, AP2),** the second access point located on the searched route
**characterized in that**
the first portion of distribution information and the second portion of distribution information are defined based on types of the distribution information,

11. A storage medium storing a set of program instructions executable on a data processing device and usable for performing the method recited in claim 10.

## Patentansprüche

1. Informationsverteilungszentrum mit:
einer Steuerung (64), die angepasst ist, um:
eine Fahrtroute von einem Abfahrtort an einen Zielort als eine Suchfahrroute (Rt1) zu suchen;
nach Zugangspunkten auf der Suchfahrroute zu suchen
einen ersten Zugangspunkt (75) auf Grundlage von Verteilungsinformationen auszuwählen, der mit einer mobilen Endgerätvorrichtung (14) kommunizieren kann, wenn ein Fahrzeug eingeschaltet wird, und der einem ersten Anteil der Verteilungsinformationen entspricht;
einen zweiten Zugangspunkt (AP1, AP2) entlang der Suchfahrroute auf Grundlage von Verteilungsinformationen auszuwählen, der einem zweiten Anteil von Verteilungsinformationen entspricht;
den ersten Anteil der Verteilungsinformationen an den ersten Zugangspunkt zu übertragen; und
den zweiten Anteil der Verteilungsinformationen an den zweiten Zugangspunkt zu übertragen,
**dadurch gekennzeichnet, dass**
die Steuerung (64) angepasst ist, den ersten Anteil von Verteilungsinformationen und einen zweiten Anteil von Verteilungsinformationen auf Grundlage von Arten der Verteilungsinformationen zu definieren.

2. Informationsverteilungszentrum nach Anspruch 1, wobei die Steuerung (64) angepasst ist, die gesamten Verteilungsinformationen an den ersten Zugangspunkt (75) zu übertragen, wenn es keinen Zugangspunkt auf der Suchfahrroute gibt.

3. Informationsverteilungszentrum nach Anspruch 1, wobei die Steuerung (64) angepasst ist, die Größe des ersten Anteils von Verteilungsinformationen und die Größe des zweiten Anteils von Verteilungsinformationen auf Grundlage von einem oder mehreren eines Kommunikationsbereichs eines jeden Zugangspunkts (AP1, AP2), der Suchfahrroute (Rt1), einer Kommunikationsgeschwindigkeit mit jedem Zugangspunkt und einer durchschnittlichen Fahrzeuggeschwindigkeit in der Nähe eines jeden Zugangspunktes zu bestimmen.

4. Informationsverteilungszentrum nach Anspruch 1, wobei die Steuerung (64) angepasst ist, wenn ein Plan eines Nutzers angibt, dass die Verteilungsinformationen benötigt wird, einen dritten Anteil der Verteilungsinformationen, der sich vor einer in dem Plan angegebenen Abfahrtszeit nicht ändern wird, vor der in dem Plan angegebenen Abfahrtszeit zu übertragen.

5. Mobile Endgerätvorrichtung mit:
einer Steuerung (17), die angepasst ist, um:
eine Anforderung zu übertragen, Verteilungsinformationen von einem Informationsverteilungszentrum (62) zu empfangen;
einen ersten Anteil der Verteilungsinformationen einschließlich einer Suchfahrroute (Rt1) von einem ersten Zugangspunkt (75) zu empfangen, wobei der erste Zugangspunkt in der Lage ist, mit der mobilen Endgerätvorrichtung zu kommunizieren, wenn ein Fahrzeug eingeschaltet wird;
einen zweiten Anteil der Verteilungsinformationen von einem zweiten Zugangspunkt (AP1, AP2) zu empfangen, wobei der zweite Zugangspunkt auf der Suchfahrroute liegt;
**dadurch gekennzeichnet, dass**
der erste Anteil von Verteilungsinformationen und der zweite Anteil von Verteilungsinformationen auf Grundlage von Arten der Verteilungsinformationen definiert sind.

6. Verfahren, zum verteilen von Informationen, mit:
einem Suchen einer Fahrtroute von einem Abfahrtort zu einem Zielort als eine Suchfahrroute (Rt1);
einem Suchen nach Zugangspunkten auf der Suchfahrroute;
einem Auswählen eines ersten Zugangspunkts (75) auf Grundlage von Verteilungsinformationen, der mit einer mobilen Endgerätvorrichtung kommunizieren kann, wenn ein Fahrzeug eingeschaltet wird, und der einem ersten Anteil von Verteilungsinformationen entspricht;
einem Auswählen eines zweiten Zugangspunkts (AP1, AP2) entlang der Suchfahrroute auf Grundlage der Verteilungsinformationen, der einem zweiten Anteil von Verteilungsinformationen entspricht;
einem Übertragen des ersten Anteils der Verteilungsinformationen an den ersten Zugangspunkt (75); und
einem Übertragen des zweiten Anteils der Verteilungsinformationen an den zweiten Zugangspunkt (AP1, AP2),
**gekennzeichnet durch**
einem Definieren des ersten Anteils von Verteilungsinformationen und eines zweiten Anteils von Verteilungsinformationen auf Grundlage von Arten der Verteilungsinformationen.

7. Verfahren nach Anspruch 6, ferner mit:
einem Bestimmen der Größe des ersten Anteils der Verteilungsinformationen und der Größe des zweiten Anteils von Verteilungsinformationen auf Grundlage von einem oder mehreren eines Kommunikationsbereichs eines jeden Zugangspunkts (75, AP1, AP2), der Suchfahrroute (Rt1), einer Kommunikationsgeschwindigkeit mit jedem Zugangspunkt und einer durchschnittlichen Fahrzeuggeschwindigkeit in der Nähe eines jeden Zugangspunktes.

8. Verfahren nach Anspruch 6, ferner mit:
einem Übertragen eines dritten Anteils von Verteilungsinformationen, der sich vor einer in einem Plan angegebenen Abfahrtszeit nicht ändern wird, vor der in dem Plan angegebenen Abfahrtszeit, wenn der Plan eines Nutzers angibt, dass die Verteilungsinformation benötigt wird.

9. Speichermedium, das einen Satz von auf einer Datenverarbeitungseinrichtung ausführbaren und für ein Durchführen des in Anspruch 6 beschriebenen Verfahrens nutzbaren Programminstruktionen speichert.

10. Verfahren zum Verteilen von Informationen mit:
einem Übertragen einer Anforderung, um Verteilungsinformationen von einem Informationsverteilungszentrum (62) zu empfangen;
einem Empfangen eines ersten Anteils der Verteilungsinformation einschließlich einer Suchfahrroute (Rt1) von einem ersten Zugangspunkt (75), wobei der erste Zugangspunkt in der Lage ist, mit der mobilen Endgerätvorrichtung zu kommunizieren, wenn ein Fahrzeug eingeschaltet wird;
einem Empfangen eines zweiten Anteils der Verteilungsinformationen von einem zweiten Zugangspunkt (AP1, AP2), wobei der zweite Zugangspunkt auf der Suchfahrroute liegt;
**dadurch gekennzeichnet, dass**
der erste Anteil von Verteilungsinformationen und der zweite Anteil von Verteilungsinformationen auf Grundlage von Arten der Verteilungsinformationen definiert werden.

11. Speichermedium, das einen Satz von auf einer Datenverarbeitungseinrichtung ausführbaren und für ein Durchführen des in Anspruch 10 beschriebenen Verfahrens nutzbaren Programminstruktionen speichert.

## Revendications

1. Centre de distribution d'informations, comprenant:
une unité de commande (64) qui est adaptée afin de:
rechercher une route d'un emplacement de départ à un emplacement final en tant que route de recherche (Rt1);
rechercher des points d'accès sur la route de recherche;
sélectionner, sur la base d'une information de distribution, un premier point d'accès (75) qui peut rentrer en communication avec un appareil de terminal mobile (14) lorsqu'un véhicule est démarré et qui correspond à une première partie de l'information de distribution;
sélectionner, sur la base de l'information de distribution, un deuxième point d'accès (AP1, AP2) le long de la route de recherche qui correspond à une deuxième partie de l'information de distribution;
transmettre la première partie de l'information de distribution au premier point d'accès; et
transmettre la deuxième partie de l'information de distribution au deuxième point d'accès;
**caractérisé en ce que**
l'unité de commande (64) est adaptée pour définir la première partie d'une information de distribution et la deuxième partie d'une information de distribution sur la base de types de l'information de distribution.

2. Centre de distribution d'informations de la revendication 1, dans lequel, s'il n'y a aucun point d'accès sur la route de recherche, l'unité de commande (64) est adaptée pour transmettre l'ensemble de l'information de distribution au premier pont d'accès (75).

3. Centre de distribution d'informations de la revendication 1, dans lequel l'unité de commande (64) est adaptée pour déterminer la taille de la première partie d'une information de distribution et la taille de la deuxième partie d'une information de distribution sur la base de l'un ou plus d'une gamme de communication de chaque point d'accès (AP1, AP2), de la route de recherche (Rt1), d'une vitesse de communication avec chaque point d'accès, et d'une vitesse moyenne du véhicule à proximité de chaque point d'accès.

4. Centre de distribution d'informations de la revendication 1, dans lequel l'unité de commande (64) est adaptée pour transmettre, si un emploi du temps d'un utilisateur indique que l'information de distribution est nécessaire, une troisième partie de l'information de distribution qui ne va pas changer avant une heure de départ indiquée dans l'emploi du temps, avant l'heure de départ indiquée dans l'emploi du temps.

5. Appareil de terminal mobile, comprenant:
une unité de commande (17) qui est adaptée afin de:
transmettre une demande pour recevoir une information de distribution d'un centre de distribution d'informations (62);
recevoir une première partie de l'information de distribution, incluant une route recherchée (Rt1), d'un premier point d'accès (75), le premier point d'accès capable de rentrer en communication avec l'appareil de terminal mobile lorsqu'un véhicule est démarré;
recevoir une deuxième partie de l'information de distribution d'un deuxième point d'accès (AP1, AP2), le deuxième point d'accès situé sur la route recherchée;
**caractérisé en ce que**
la première partie d'une information de distribution et la deuxième partie d'une information de distribution sont définies sur la base de types de l'information de distribution.

6. Procédé de distribution d'informations, comprenant:
rechercher une route d'un emplacement de départ à un emplacement final en tant que route de recherche (Rt1);
rechercher des points d'accès sur la route de recherche;
sélectionner, sur la base d'une information de distribution, un premier point d'accès (75) qui peut rentrer en communication avec un appareil de terminal mobile lorsqu'un véhicule est démarré et qui correspond à une première partie de l'information de distribution;
sélectionner, sur la base de l'information de distribution, un deuxième point d'accès (AP1, AP2) le long de la route de recherche qui correspond à une deuxième partie d'une information de distribution;
transmettre la première partie de l'information de distribution au premier point d'accès (75); et
transmettre la deuxième partie de l'information de distribution au deuxième point d'accès (AP1, AP2)
**caractérisé par**
le fait de définir la première partie d'une information de distribution et la deuxième partie d'une information de distribution sur la base de types de l'information de distribution.

7. Procédé de la revendication 6, comprenant en plus:
déterminer la taille de la première partie d'une information de distribution et la taille de la deuxième partie d'une information de distribution sur la base de l'un ou plus d'une gamme de communication de chaque point d'accès (75, AP1, AP2), de la route de recherche (Rt1), d'une vitesse de communication avec chaque point d'accès, et d'une vitesse moyenne du véhicule à proximité de chaque point d'accès.

8. Procédé de la revendication 6, comprenant en plus:
transmettre, si un emploi du temps d'un utilisateur indique que l'information de distribution est nécessaire, une troisième partie de l'information de distribution qui ne va pas changer avant une heure de départ indiquée dans l'emploi du temps, avant l'heure de départ indiquée dans l'emploi d temps.

9. Support de stockage stockant un ensemble d'instructions de programme exécutables sur un dispositif de traitement de données et utilisables pour réaliser le procédé selon la revendication 6.

10. Procédé de distribution d'informations, comprenant:
transmettre une demande pour recevoir une information de distribution d'un centre de distribution d'informations (62);
recevoir une première partie de l'information de distribution, incluant une route recherchée (Rt1), d'un premier point d'accès (75), le premier point d'accès capable de rentrer en communication avec l'appareil de terminal mobile lorsqu'un véhicule est démarré;
recevoir une deuxième partie de l'information de distribution d'un deuxième point d'accès (AP1, AP2), le deuxième point d'accès étant situé sur la route recherchée
**caractérisé en ce que**
la première partie d'une information de distribution et la deuxième partie d'une information de distribution sont définies sur la base de types de l'information de distribution.

11. Support de stockage stockant un ensemble d'instruction de programme exécutables sur un dispositif de traitement de données et utilisables pour réaliser le procédé selon la revendication 10.
